# EUROPÄISCHE PATENTSCHRIFT

(11) **EP 0 596 279 B1**
(45) Veröffentlichungstag und Bekanntmachung des Hinweises auf die Patenterteilung: **03.07.1996**
(21) Anmeldenummer: 93116394.3
(22) Anmeldetag: 09.10.1993
(51) Int. Cl.: B29C 47/08, B29C 33/20

(54) **Spritzkopf für eine Extrusionsanlage der Kautschuk oder Kunststoff verarbeitenden Industrie**
Extrusion head for an extruder apparatus for the rubber or plastics industry
Tête d'extrusion pour une extrudeuse dans l'industrie de transformation du caoutchouc ou des matières plastiques

(30) Priorität: 27.10.1992 DE 4236120
(43) Veröffentlichungstag der Anmeldung: 11.05.1994
(73) Patentinhaber: Paul Troester Maschinenfabrik, D-30519 Hannover (DE)
(72) Erfinder: Unland, Eckhard, Dipl.-Ing., D-30173 Hannover (DE)
(74) Vertreter: Junius, Walther, Dr.

(56) Entgegenhaltungen:
- EP-A- 0 503 540
- DE-A- 3 430 062
- DE-A- 3 629 096
- DE-C- 1 729 618
- FR-A- 2 293 302

## Beschreibung

Die Erfindung betrifft einen Spritzkopf für eine Extrusionsanlage der Kautschuk oder Kunststoff verarbeitenden Industrie, bestehend aus einem an der Extrusionsanlage anzuflanschenden feststehenden Teil und mindestens einem an der Spritzleiste anliegenden, für Reinigungszwecke verschwenkbaren Teil, der mittels eines Gelenkes am feststehenden Teil angelenkt ist, mittels einer Kolben-Zylinder-Einheit verschwenkbar und mittels eines Paares von je einer weiteren Kolben-Zylinder-Einheit betätigten Zugankern am feststehenden Teil festzuklammern ist, indem eine Gelenkverbindung zwischen Zuganker und Kolben-Zylinder-Einheit über eine Zuggabel mit einem Gelenkbolzen vorgesehen ist, um den Zuganker aus dem Verschwenkweg des verschwenkbaren Spritzkopfteiles ausschwenkbar zu machen.

Ein derartiger Spritzkopf ist aus der DE-C-17 29 618, in anderer ähnlicher Ausführungsform aus der DE 34 30 062 C2 und in einer weiteren ähnlichen Ausführungsform aus der DE 37 36 231 A1 bekannt geworden. Alle diese Ausführungsformen klammern die beweglichen Teile des Spritzkopfes nicht mittels Klammern zusammen und am feststehenden Spritzkopfteil fest, wie das bei der DE 22 01 631 C3 und der DE 22 36 363 A1 der Fall ist, wo die Zusammenhaltekräfte von Klammern aufgenommen werden, die von Kolben-Zylinder-Einheiten verschoben und in ihre Schließstellung gesichert werden, sondern bringen die erforderlichen hohen Schließkräfte allein durch Kolben-Zylinder-Einheiten auf. Das macht die Verwendung sehr kräftiger Kolben-Zylinder-Einheiten erforderlich. Diese sind sehr schwer und nur schwer bewegbar.

Im Falle der DE-C-17 29 618 ist die Kolben-Zylinder-Einheit fest an dem feststehenden Teil des Spritzkopfes montiert und der an seinem an die Kolben-Zylinder-Einheit angekoppelten Ende gabelförmig gestaltete und durch einen Gelenkbolzen mit der Kolbenstange der Kolben-Zylinder-Einheit verbundene Zuganker nach außen verschwenkbar gelagert. Die für das Öffnen des Spritzkopfes notwendige Bewegung des Zugankers ist von der Kolben-Zylinder-Einheit dadurch abgeleitet, daß ein Lenker zwischen dem feststehenden Teil des Spritzkopfes und dem Zuganker montiert ist.

Im Falle der DE 34 30 062 C2 ist die Kolben-Zylinder-Einheit an ihrem einen Ende nach außen verschwenkbar am feststehenden Teil des Spritzkopfes angelenkt, ein an der Einheit befestigter Stift ist in einer Kulisse in Form eines schräg angeordneten Langloches verschiebbar. Beim Öffnungsvorgang wird die Kolben-Zylinder-Einheit unter dem Einfluß dieser Kulisse nach außen gedrückt, so daß die Zuganker aus der Bewegungsbahn der verschwenkbaren Spritzkopfteile für deren Öffnungsvorgang herausgeschwenkt werden.

In beiden Ausführungsformen ist die Anpreßbewegung des Zugankers mit einer senkrecht hierzu erfolgenden Schließbewegung des Zugankers gekoppelt, was kinematisch und energetisch ungünstig ist. Denn während der Anpreßbewegung sollte die Schließbewegung bereits erfolgt sein.

Die Verschwenkung der die Zuganker bewegenden Kolben-Zylinder-Einheiten erfordert soviel Aufwand, daß in der DE 37 36 231 A1 nach einer anderen Losung gesucht wurde. Dies wurde mit feststehenden Kolben-Zylinder-Einheiten realisiert, deren Kolbenstange bei ihrer Verschiebebewegung mittels einer Kulisse gedreht wird. Die Kolbenstange trägt an ihrem freien Ende ein hammerkopfartiges Bauteil, das hinter zwei am verschwenkbaren Spritzkopfteil angebrachte Vorsprünge greift und über diese die Schließkräfte auf den verschwenkbaren Spritzkopfteil überträgt. Für die Öffnung des Spritzkopfes wird der Zuganker zuerst gelöst, dann dessen Hammerkopf um 90° gedreht und dann zwischen den beiden Vorsprüngen zurückgezogen, um den Weg für ein Verschwenken des zugeordneten verschwenkbaren Spritzkopfteiles frei zu machen. Lange Kolben-Zylinder-Einheiten, eine aufwendige Drehmechanik und lange Schließ- und Öffnungsdauern sind die Nachteile dieses bekannten Spritzkopfes.

Die Erfindung vermeidet die Nachteile des Standes der Technik. Es ist die Aufgabe der Erfindung, mit einfachen Mitteln und geringem Bauaufwand eine Lösung zu finden, bei der die Kolben-Zylinder-Einheiten fest montiert sind und alle beweglichen Teile der Verschwenkvorrichtung beim Öffnungs- und Schließvorgang kraft- und formschlüssig miteinander verbunden bleiben.

Die Erfindung besteht darin, daß jeder der beiden Zuganker in einer Zuggabel gelagert ist, daß die Zuggabel vom Ende der Kolbenstange getragen oder gebildet ist, und daß an der Zuggabel eine weitere Kolben-Zylinder-Einheit gelagert ist, die mit ihrem anderen Ende an dem Zuganker verschwenkbar befestigt ist, indem am Kopf des Zugankers ein Lager angeordnet ist, in welchem das eine Ende einer Kolben-Zylinder-Einheit gelagert ist, deren anderes Ende in dem Lager an der Zuggabel gelagert ist.

Hierdurch ist einerseits erreicht, daß die einzelnen zu bewegenden Teile immer kraft- und formschlüssig miteinander verbunden bleiben, andererseits ist erreicht, daß die schweren Kolben-Zylinder-Einheiten fest gelagert bleiben und nicht zu bewegen sind, wenn die verschwenkbaren Teile des Spritzkopfes in die Offen- oder Verschlußstellung verschwenkt werden. Dabei wird es möglich, die Kolben-Zylinder-Einheiten kürzer und dadurch auch leichter zu bauen. Die ganze Konstruktion wird weniger aufwendig und stabiler, obwohl sie leichter geworden ist.

Dabei ist es zweckmäßig, wenn die Verschwenkebene der Zuggabeln senkrecht zur Verschwenkebene des oder der verschwenkbaren Spritzkopfteile verläuft. In dieser Weise läßt sich die ganze Konstruktion besonders einfach ausführen.

Vorteilhaft ist es, wenn die Zuganker einen Abstand von einander haben, der größer als die Breite der Spritzleiste ist. Hierdurch wird es möglich, Eine Spritzleistenwechselvorrichtung oder eine Siebwechselvorrichtung zwischen den Zugankern unterzubringen.

Aus Platzgründen ist es zweckmäßig, die an den Zugankern und an den Zuggabeln angelenkten Kolben-Zylinder-Einheiten auf der den beweglichen Spritzkopfteilen abgekehrten Seite anzuordnen.

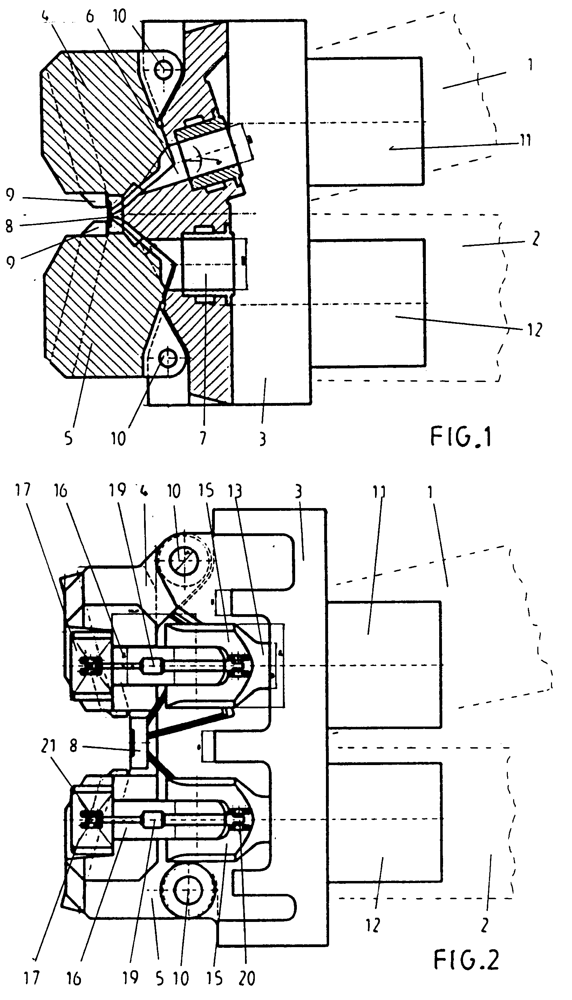

Das Wesen der Erfindung ist nachstehend anhand von in der Zeichnung schematisch dargestellten Ausführungsbeispielen näher erläutert. Es zeigen:
- Fig.1: einen Schnitt durch die Spritzkopfteile einer Extrusionsanlage mit zwei Extrudern
- Fig.2: eine Seitenansicht des Spritzkopfes der Fig.1
- Fig.3: eine Seitenansicht eines beweglichen Spritzkopfteiles mit Zuganker und Verschwenk-Kolben-Zylinder-Einheit
- Fig.4: eine Ansicht eines beweglichen Spritzkopfteiles mit Zuganker von oben im geöffneten Zustand
- Fig.5: eine Ansicht eines beweglichen Spritzkopfteiles mit Zuganker von oben im geschlossenen Zustand
- Fig.6: eine Seitenansicht, teilweise im Schnitt, einer Extrusionsanlage mit drei Extrudern
- Fig.7: eine Seitenansicht, teilweise im Schnitt, einer Extrusionsanlage mit vier Extrudern
Der Spritzkopf der Fig.1 besteht aus einem festen, an den Extrudern 1,2 anzuflanschenden Teil 3 und zwei beweglichen aufklappbaren Teilen 4 und 5. Diese schließen zwischen sich Führungskanäle 6,7 für das Extrudat sowie die das Extrudat ausformende Spritzleiste 8 ein. Diese Spritzleiste 8 wird von in Ausnehmungen in den Teilen 4 und 5 verschiebbaren Haltern 9 in ihrem Sitz festgeklemmt. Die beiden beweglichen, aufklappbaren Teile 4,5 sind am feststehenden Teil 3 des Spritzkopfes mittels Gelenkbolzen 10 befestigt.

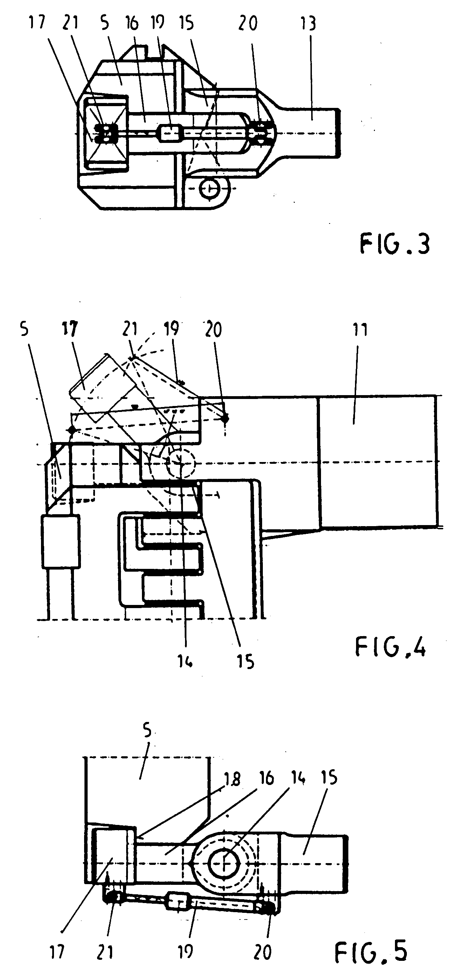

An den Seiten des feststehenden Spritzkopfteiles 3 sind Kolben-Zylinder-Einheiten 11,12 befestigt, deren Kolbenstangen 13 zu einer einen Gelenkbolzen 14 tragenden Zuggabel 15 an ihrem freien Ende ausgeformt sind. Auf diesem Gelenkbolzen 14 ist der Zuganker 16 verschwenkbar gelagert, dessen Kopf 17 im geschlossenen Zustand des Spritzkopfes hinter die Anlageflächen 18 an den beweglichen Spritzkopfteilen 4,5 faßt und diese beweglichen Spritzkopfteile 4,5 gegen den festen Spritzkopfteil 3 preßt. Am Kopf 17 des Zugankers 16 befindet sich ein Lager 21, in welchem das eine Ende einer Kolben-Zylinder-Einheit 19 gelagert ist, deren anderes Ende in dem Lager 20 an der Zuggabel 15 gelagert ist. Diese Kolben-Zylinder-Einheit 19 dient der Verschwenkung des Zugankers 16 aus seiner Schließstellung der Fig.5 in die Offenstellung der Fig.4 und umgekehrt.

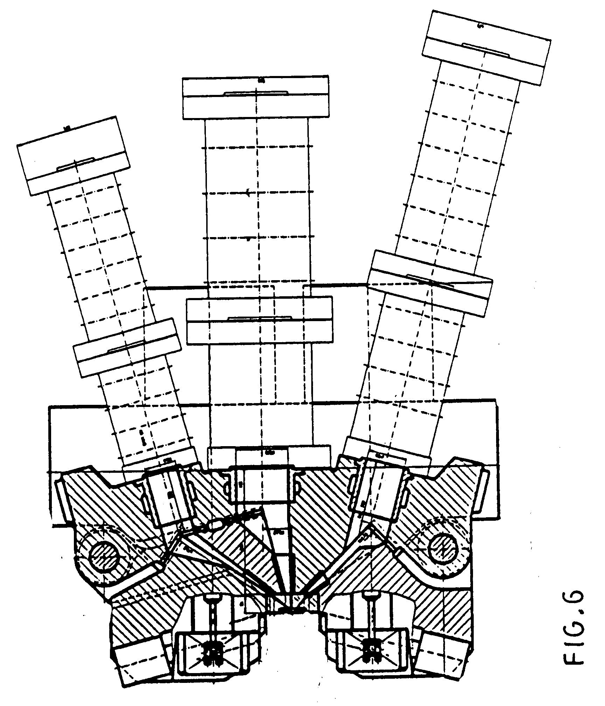

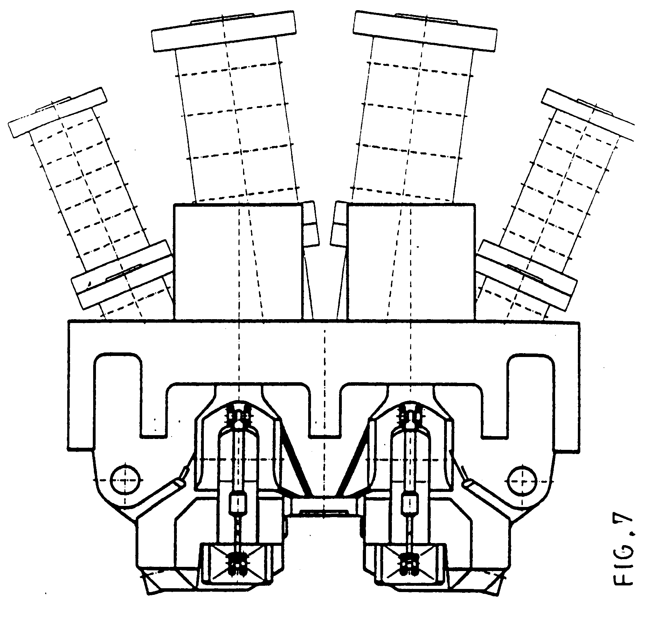

Die Fig.6 und 7 zeigen aus gleichen Teilen aufgebaute Spritzköpfe für den Anschluß an drei und vier Extruder.

## Patentansprüche

1. Spritzkopf für eine Extrusionsanlage der Kautschuk oder Kunststoff verarbeitenden Industrie,
bestehend aus einem an der Extrusionsanlage (1,2) anzuflanschenden feststehenden Teil (3) und mindestens einem an der Spritzleiste (8) anliegenden, für Reinigungszwecke verschwenkbaren Teil (4,5), der mittels eines Gelenkes (10) am feststehenden Teil (3) angelenkt ist, mittels einer Kolben-Zylinder-Einheit verschwenkbar und mittels eines Paares von je einer weiteren Kolben-Zylinder-Einheit (12,13) betätigten Zugankern (16) am feststehenden Teil (3) festzuklammern ist,
indem eine Gelenkverbindung zwischen Zuganker (16) und Kolben-Zylinder-Einheit (12,13) über eine Zuggabel (15) mit einem Gelenkbolzen (14) vorgesehen ist, um den Zuganker (16) aus dem Verschwenkweg des verschwenkbaren Spritzkopfteiles (4,5) ausschwenkbar zu machen,
dadurch gekennzeichnet,
daß jeder der beiden Zuganker (16) in einer Zuggabel (15) gelagert ist,
daß die Zuggabel (15) vom Ende der Kolbenstange (13) getragen oder gebildet ist,
und daß an der Zuggabel (15) eine weitere Kolben-Zylinder-Einheit (19) gelagert ist, die mit ihrem anderen Ende an dem Zuganker (16) verschwenkbar befestigt ist,
indem am Kopf (17) des Zugankers (16) ein Lager (21) angeordnet ist, in welchem das eine Ende einer Kolben-Zylinder-Einheit (19) gelagert ist,
deren anderes Ende in dem Lager (20) an der Zuggabel (15) gelagert ist.

2. Spritzkopf nach Anspruch 1,
dadurch gekennzeichnet,
daß die Verschwenkebene der Zuggabeln (15) senkrecht zur Verschwenkebene des oder der verschwenkbaren Spritzkopfteile (4,5) verläuft.

3. Spritzkopf nach Anspruch 1,
dadurch gekennzeichnet,
daß die Zuganker (16) einen Abstand voneinander haben, der größer als die Höhe der Spritzleiste (8) ist.

4. Spritzkopf nach Anspruch 1 mit zwei Zugankerpaaren,
dadurch gekennzeichnet,
daß zwischen den Zugankerpaaren Teile einer Wechselvorrichtung für Spritzleisten (8) angeordnet sind.

5. Spritzkopf nach Anspruch 1,
dadurch gekennzeichnet,
daß die an den Zugankern (16) und an den Zuggabeln (15) angelenkten Kolben-Zylinder-Einheiten (19) auf der den beweglichen Spritzkopfteilen (4,5) abgekehrten Seite angeordnet sind.

## Claims

1. Extrusion head for an extrusion installation for the rubber or plastics processing industry, consisting of a fixed part (3) to be flange-mounted on the extrusion installation (1, 2) and of at least one part (4, 5) which bears on the extrusion strip (8) and is pivotable for cleaning purposes, which part (4, 5) is articulated by means of a joint (10) on the fixed part (3) and is pivotable by means of a piston and cylinder unit and is to be clamped securely on the fixed part (3) by means of a pair of tie rods (16) each actuated by a further piston and cylinder unit (12, 13), in that a hinged joint is provided between the tie rod (16) and the piston and cylinder unit (12, 13) by means of a fork (15) with a pivot pin (14) in order to make the tie rod (16) pivotable out of the pivoting path of the pivotable extrusion head part (4, 5), characterised in that each of the two tie rods (16) is mounted in a fork (15), in that the fork (15) is borne or formed by the end of the piston rod (13), and in that mounted on the fork (15) there is a further piston and cylinder unit (19) which is fixed pivotably by its other end to the tie rod (16) in that the head (17) of the tie rod (16) exhibits a mounting (21) in which one end of a piston and cylinder unit (19) is mounted while the other end is mounted in the mounting (20) on the fork (15).

2. Extrusion head according to claim 1, characterised in that the pivoting plane of the forks (15) runs at right angles to the pivoting plane of the pivotable extrusion head part or parts (4, 5).

3. Extrusion head according to claim 1, characterised in that the tie rods (16) are spaced by an amount which is greater than the height of the extrusion strip (8).

4. Extrusion head according to claim 1 with two pairs of tie rods, characterised in that parts of a changing device for extrusion strips (8) are disposed between the pairs of tie rods.

5. Extrusion head according to claim 1, characterised in that the piston and cylinder units (19) hinged to the tie rods (16) and to the forks (15) are disposed on the side remote from the moving extrusion head parts (4, 5).

## Revendications

1. Tête d'extrusion pour une installation d'extrusion de l'industrie de transformation du caoutchouc ou des matières plastiques, comprenant une partie fixe (3) à monter par bridage sur l'installation d'extrusion (1, 2) et au moins une partie (4, 5) montée pivotante à des fins de nettoyage et appliquée contre une barre d'extrusion (8) formant filière, partie pivotante qui est attachée par une articulation (10) à la partie fixe (3), peut être animée d'un pivotement par un vérin mû par un fluide de pression et peut être pressée contre la partie fixe (3) au moyen d'une paire de tirants (16) manoeuvrés chacun par un vérin supplémentaire (12, 13) mû par un fluide de pression, du fait qu'une liaison articulée est prévue entre le tirant (16) et le vérin (12, 13) par l'intermédiaire d'une chape femelle de tirage (15) avec un axe d'articulation (14) pour pouvoir dégager le tirant (16) par pivotement hors du trajet de pivotement de la partie pivotante (4, 5) de la tête d'extrusion, caractérisée en ce
que chacun des deux tirants (16) est monté dans une chape de tirage (15),
que la chape de tirage (15) est portée ou formée par l'extrémité de la tige de piston (13),
et qu'un vérin supplémentaire (19) mû par un fluide de pression est monté sur la chape de tirage (15) et fixé par son autre extrémité au tirant (16),
du fait que la tête (17) du tirant (16) contient un palier (21) dans lequel est montée une extrémité d'un vérin (19) dont l'autre extrémité est montée dans le palier (20) sur la chape de tirage (15).

2. Tête d'extrusion selon la revendication 1, caractérisée en ce que le plan de pivotement des chapes de tirage (15) est perpendiculaire au plan de pivotement de la partie pivotante ou des parties pivotantes (4, 5) de la tête d'extrusion.

3. Tête d'extrusion selon la revendication 1, caractérisée en ce que les tirants (16) sont mutuellement espacés d'une distance supérieure à la hauteur de la barre d'extrusion (8).

4. Tête d'extrusion selon la revendication 1 et possédant deux paires de tirants, caractérisée en ce qu'un changeur de barres d'extrusion (8) est agencé entre les paires de tirants.

5. Tête d'extrusion selon la revendication 1, caractérisée en ce que les vérins (19) articulés sur les tirants (16) et les chapes de tirage (15) sont placés du côté éloigné des parties mobiles (4, 5) de la tête d'extrusion.
